# EUROPÄISCHE PATENTSCHRIFT

(11) **EP 3 590 351 B1**
(45) Veröffentlichungstag und Bekanntmachung des Hinweises auf die Patenterteilung: **03.03.2021**
(21) Anmeldenummer: 19184565.0
(22) Anmeldetag: 05.07.2019
(51) Int. Cl.: A23G 9/12, A23G 9/22

(54) **ZUBEREITUNGSGEFÄSS MIT EINER KÜHLEINRICHTUNG**
PREPARATION CONTAINER COMPRISING A COOLING DEVICE
CUVE DE PRÉPARATION POURVUE D'UN DISPOSITIF DE REFROIDISSEMENT

(30) Priorität: 05.07.2018 DE 102018116336
(43) Veröffentlichungstag der Anmeldung: 08.01.2020
(73) Patentinhaber: Vorwerk & Co. Interholding GmbH, 42275 Wuppertal (DE)
(72) Erfinder: Kellenberger, Michel, 8404 Stadel bei Winterthur (CH); Stahl, Stefan, 8046 Zürich (CH)
(74) Vertreter: Müller, Enno

(56) Entgegenhaltungen:
- EP-A1- 0 133 844
- EP-A1- 3 501 353
- WO-A1-2006/010538
- WO-A1-2007/135130
- BR-A- 8 505 264
- CN-U- 205 358 065
- DE-A1- 3 921 115
- GB-A- 2 144 208
- GB-A- 2 304 179
- JP-A- S60 160 847
- US-A1- 2013 221 013
- US-A1- 2016 215 194

## Beschreibung

### Gebiet der Technik

Die Erfindung betrifft ein Zubereitungsgefäß, insbesondere für eine Küchenmaschine, wobei das Zubereitungsgefäß eine Gefäßwandung und einen von der Gefäßwandung umgebenen Zubereitungsraum aufweist, wobei der Gefäßwandung eine die Gefäßwandung, nämlich eine eine den Zubereitungsraum begrenzende Innenwandung der Gewäßwandung wärmeleitend kontaktierende Kühleinrichtung zur Kühlung eines in dem Zubereitungsraum vorhandenen Zubereitungsgutes zugeordnet ist, wobei die Kühleinrichtung in wärmeleitendem Kontakt mit der Innenwandung steht.

Des Weiteren betrifft die Erfindung eine Küchenmaschine mit einem Basisgerät und einem mit dem Basisgerät verbindbaren Zubereitungsgefäß, wobei das Basisgerät und das Zubereitungsgefäß korrespondierende elektrische Kontakte zur Energieversorgung elektrischer Verbraucher des Zubereitungsgefäßes durch eine Energiequelle des Basisgerätes aufweisen.

### Stand der Technik

Zubereitungsgefäße sowie Küchenmaschinen mit solchen Zubereitungsgefäßen sind im Stand der Technik bekannt.

Die Veröffentlichung WO 2007/135130 A1 offenbart beispielsweise eine Küchenmaschine, nämlich eine Speiseeisbereitungs-Vorrichtung, mit einer einer Gefäßwandung zugeordneten Kühleinrichtung in Form eines Peltier-Elements. Das Peltier-Element ist mit seiner kühlenden Seite mit der Gefäßwandung verbunden und wird auf seiner warmen Seite mittels eines Kühlkreislaufes gekühlt, in welchem ein Wärmeübertragungsmedium geführt wird. Dem Kühlkreislauf kann zur Kühlung ein weiteres Peltier-Element zugeordnet sein.

Im Stand der Technik sind diverse weitere Ausbildungen zur Kühlung eines Zubeitungsgefäßes bzw. darin enthaltener Zubereitungsgüter bekannt. Es wird auf die Dokumente WO 2006/010538 A1, CN 205 358 065 U, JP S60 160847 A, US 2016/215194 A1, GB 2 304 179 A, EP 3 501 353 A1, BR 8 505 264 A, US 2013/221013 A1, EP 0 133 844 A1, DE 39 21115 A1, GB 2144 208 A hingewiesen.

Obwohl sich beispielsweise die in WO 2007/135130 A1 offenbarte Küchenmaschine zur Zubereitung von beispielsweise Eiscreme oder anderen kühlen beziehungsweise gefrorenen Zubereitungsgütern eignet, ist diese durch die Bereitstellung eines separaten Kühlkreislaufes, in welchem ein Wärmeübertragungsmedium umgewälzt wird, aufwendig in der Herstellung und relativ groß.

### Zusammenfassung der Erfindung

Es ist daher Aufgabe der vorliegenden Erfindung, ein Zubereitungsgefäß und auch eine Küchenmaschine vorzuschlagen, welche eine Kühlung des Zubereitungsgefäßes ermöglichen, ohne das Zubereitungsgefäß beziehungsweise die Küchenmaschine mit einem Kühlkreislauf, welcher eine elektrische Pumpe benötigt, ausstatten zu müssen.

Zur Lösung dieser Aufgabe wird zunächst vorgeschlagen, dass die Gefäßwandung des Zubereitungsgefäßes zumindest in einem Teilbereich doppelwandig mit einer den Zubereitungsraum begrenzenden Innenwandung und einer separat dazu ausgebildeten, durch einen Zwischenraum von der Innenwandung beabstandeten Außenwandung ausgebildet ist, wobei der Zwischenraum in eine Richtung von dem Zubereitungsraum zu der Außenwandung betrachtet die Kühleinrichtung und ein zwischen der Kühleinrichtung und der Außenwandung befindliches Phasenwechselmaterial (PCM, Phase Change Material) aufweist, wobei das Phasenwechselmaterial ein Latentwärmespeichermaterial ist, dessen absorbierbare Wärmeenergiemenge im Bereich der für das Phasenwechselmaterial charakteristischen Umwandlungstemperatur wesentlich größer ist als eine Wärmeenergiemenge, die aufgrund der spezifischen Wärmekapazität des Phasenwechselmaterials außerhalb des Phasenumwandlungseffekts gespeichert werden kann, wobei das Phasenwechselmaterial durch Zwischenanordnung der Kühleinrichtung von der Innenwandung beabstandet ist.

Erfindungsgemäß verfügt das Zubereitungsgefäß nun über eine doppelwandige Gefäßwandung, in welcher einerseits die Kühleinrichtung zur Kühlung der Innenwandung, und andererseits ein Phasenwechselmaterial, zum Wegleiten der Wärme von der Kühleinrichtung zu der Außenwandung des Zubereitungsgefäßes angeordnet sind. In Betrachtungsrichtung von dem Zubereitungsraum zu der Außenseite des Zubereitungsgefäßes weist die Gefäßwandung hintereinander zunächst die Innenwandung, dann die Kühleinrichtung, danach das Phasenwechselmaterial und schließlich die Außenwandung auf, wobei die Kühleinrichtung und das Phasenwechselmaterial sich innerhalb des Zwischenraums der doppelwandigen Gefäßwandung befinden. Die Kühleinrichtung leitet die aus dem Zubereitungsraum übernommene Wärmeenergie an das Phasenwechselmaterial weiter, welches die Wärmeenergie aufgrund der für Phasenwechselmaterialien hohen spezifischen Wärmekapazität aufnehmen kann. Das Phasenwechselmaterial ist durch Zwischenanordnung der Kühleinrichtung von der Innenwandung beabstandet Somit weist das Phasenwechselmaterial keinen direkten Kontakt mit der Innenwandung des Zubereitungsgefäßes auf, so dass die Wärmeübertragung aus dem Zubereitungsraum auf das Phasenwechselmaterial ausschließlich über die Kühleinrichtung erfolgt. Grundsätzlich ist es jedoch nicht ausgeschlossen, dass die Gefäßwandung sowohl Teilbereiche aufweist, an welchen die Innenwandung direkt von dem Phasenwechselmaterial kontaktiert ist und Teilbereiche, an welchen zwischen dem Phasenwechselmaterial und der Innenwandung zumindest ein Teilbereich der Kühleinrichtung angeordnet ist. Im Gegensatz zum Stand der Technik ist es nicht mehr erforderlich, zur Kühlung der Kühleinrichtung beziehungsweise des Zubereitungsraums einen Kühlkreislauf auszubilden, der durch eine elektrische Pumpe angetrieben wird. Vielmehr kann sowohl die Kühleinrichtung, als auch das Phasenwechselmaterial, in die Gefäßwandung selbst eingebracht werden, nämlich in den Zwischenraum zwischen einer Innenwandung und einer Außenwandung der Gefäßwandung. Somit kann das erfindungsgemäße Zubereitungsgefäß einerseits ein solches sein, welches zur Verbindung mit einem Basisgerät einer Küchenmaschine ausgebildet ist und elektrische Energie für beispielsweise die Kühleinrichtung von einer Energiequelle des Basisgerätes der Küchenmaschine bezieht, oder ein Zubereitungsgefäß, welches als "stand alone Gerät" ausgebildet ist und über eine eigene Energieversorgung verfügt, so dass das Zubereitungsgefäß als solches ohne Zuhilfenahme anderer Geräte einsatzbereit ist.

Phasenwechselmaterialien, auch Latentwärmespeichermaterialien genannt, besitzen spezifische Wärmekapazitäten von größer als 2 kJ/(kg K). Die Phasenwechselmaterialien zeichnen sich dadurch aus, dass diese Wärmeenergie verlustarm und über lange Zeit speichern können. Die latente Schmelzwärme, d.h. die absorbierbare Wärmeenergiemenge, ist im Bereich der für das jeweilige Phasenwechselmaterial charakteristischen Umwandlungstemperatur wesentlich größer als die Wärmeenergiemenge, die aufgrund der spezifischen Wärmekapazität des Materials außerhalb des Phasenumwandlungseffekts gespeichert werden kann. In Alltagsgegenständen werden diese Phasenwechselmaterialien beispielsweise in Wärmekissen und Kühlakkus verwendet. Die Wärmespeichermedien werden unter Nutzung ihres Phasenübergangs von fest zu flüssig, und umgekehrt, genutzt. Beim Aufladen des Wärmespeichermediums mit Wärmeenergie wird das Wärmespeichermedium geschmolzen, wobei sehr viel Wärmeenergie aufgenommen werden kann. Die Freigabe der gespeicherten Wärmeenergiemenge findet bei dem Erstarren des Wärmespeichermediums statt, wobei die zuvor aufgenommene große Wärmemenge als Erstarrungswärme wieder an die Umgebung abgegeben wird. Der Vorteil der Phasenwechselmaterialien ist, dass in einem kleinen durch die Umwandlungstemperatur vorgegebenen Temperaturbereich eine große Menge Wärmeenergie in einer relativ geringen Masse gespeichert werden kann. Hinzu kommt, dass die Wärmeenergie aufgrund der Nutzung metastabiler Zustände des Wärmespeichermediums auch ohne oder mit geringerer thermischer Isolierung als bei Materialien, bei welchen kein Umwandlungseffekt im Hinblick auf eine Wärmespeicherung genutzt wird, und sehr verlustarm gespeichert werden kann. Die Freigabe der gespeicherten Wärmeenergie aus dem Phasenwechselmaterial kann dann wiederum durch beispielsweise Herunterkühlen des Zubereitungsgefäßes in einem Kühlschrank oder durch Aufheizen eines in dem Zubereitungsraum befindlichen Mediums, wie z.B. Wasser, erreicht werden.

Insbesondere wird vorgeschlagen, dass die Kühleinrichtung ein Peltier-Element ist. Die Kühleinrichtung kann aus mehreren in Umfangsrichtung der Gefäßwandung hintereinander angeordneten Peltier-Elementen bestehen, so dass die Mehrzahl von Peltier-Elementen den Zubereitungsraum ringförmig umgibt. Die Peltier-Elemente sind wärmeleitfähig mit der Innenwandung des Zubereitungsgefäßes in Kontakt, dazu kann gegebenenfalls ein Wärmeleitgel oder eine Wärmeleitpaste angewendet werden. Ein Peltier-Element besteht aus zwei Keramik-Platten, die über p- und n-dotierte Halbleiterelemente verbunden sind, wobei die p- und n-dotierten Halbleiterelemente abwechselnd paarweise über Kontaktstellen miteinander verschaltet sind. Leitet man einen Strom durch zwei hintereinanderliegende Kontaktstellen der p- und n-Leiter, so wird an einer Kontaktstelle Wärmeenergie aufgenommen und an der anderen Kontaktstelle Wärmeenergie abgegeben. Dabei hängt es von der Stromrichtung ab, welche Seite des Peltier-Elements dann kalt wird und welche Seite warm wird. Sofern die warme Seite des Peltier-Elements dann gekühlt wird, hier beispielsweise mittels des Phasenwechselmaterials, welches der warmen Seite Wärmeenergie entzieht, wird die entgegengesetzte kalte Seite des Peltier-Elements weiter heruntergekühlt. Damit kann eine noch geringere Temperatur innerhalb des Zubereitungsraums des Zubereitungsgefäßes erreicht werden. Für eine Regeneration des Phasenwechselmaterials, d.h. zur Abgabe der aufgenommenen Wärmeenergie, kann vorzugsweise die Stromrichtung durch das Peltier-Element geändert werden, so dass die wärmeabgebende Seite dann in Kontakt mit der Innenwandung steht und dort in ein kühles Medium, beispielsweise kaltes Wasser, abgegeben werden kann. Das Phasenwechselmaterial steht sodann wieder für die Aufnahme von Wärmeenergie zur Verfügung. Alternativ ist es jedoch auch möglich, das Zubereitungsgefäß insgesamt beispielsweise in einen Kühlraum oder einen Kühlschrank zu stellen, um das Phasenwechselmaterial herunterzukühlen. Alternativ zu der Ausbildung als Peltier-Element kann die Kühleinrichtung in einem besonders einfachen Fall jedoch auch einfach ein Kühlkörper, beispielsweise mit Kühlrippen, sein, der die Innenwandung des Zubereitungsgefäßes kontaktiert. Dieser Kühlkörper kann beispielsweise einteilig und/oder materialeinheitlich mit der Innenwandung des Zubereitungsgefäßes ausgebildet sein und besonders bevorzugt aus einem gut wärmeleitenden Material, insbesondere einem lebensmittelechten Metall, bestehen.

In Kombination mit einer als Peltier-Element ausgebildeten Kühleinrichtung wird zudem vorgeschlagen, dass auf der von der Innenwandung abgewandten Seite des Peltier-Elements ein Kühlkörper angeordnet ist. Auch in diesem Fall kann der Kühlkörper beispielsweise ein Kühlrippen aufweisender Kühlkörper sein. Der Kühlkörper dient zur vorteilhaften Ableitung der Wärmeenergie von der warmen Seite des Peltier-Elements, so dass die warme Seite des Peltier-Elementes heruntergekühlt wird und dadurch die kühle Seite des Peltier-Elements, welche an der Innenwandung des Zubereitungsgefäßes anliegt, noch kälter werden kann. Es empfiehlt sich, dass der Kühlkörper eine möglichst große Kühlfläche zur Verfügung stellt, beispielsweise über eine Vielzahl von nebeneinander angeordneten Kühlrippen, zwischen welchen das Phasenwechselmaterial angeordnet ist. Die Übertragung von Wärmeenergie ist somit optimal möglich.

Des Weiteren wird vorgeschlagen, dass das Phasenwechselmaterial eine spezifische Wärmekapazität von größer als 2 kJ/(kg K) aufweist. Insbesondere kann das Phasenwechselmaterial eine spezifische Wärmekapazität von größer als 4 kJ/(kg K) aufweisen. Dadurch kann innerhalb des Zwischenraums eine möglichst große Menge Wärmeenergie gespeichert werden, welche entsprechend dann dem Zubereitungsraum des Zubereitungsgefäßes entzogen wird. Das Phasenwechselmaterial kann ebenfalls als Phasenwechselmaterial-Polymer-Zusammensetzung ausgebildet sein. Die für die Zusammensetzung verwendeten Polymere sind vorzugsweise Polyethylene, insbesondere Low Density Polyethylene (LDPE), beispielsweise aus Diblock- und Triblock-Copolymeren. Diese Zusammensetzungen sind vorteilhaft ausschwitzarm beziehungsweise ausschwitzfrei, mechanisch fest und wärmeformbeständig und weisen eine verbesserte Wärmeleitfähigkeit auf. Des Weiteren kann als Phasenwechselmaterial auch Wasser verwendet werden, welches eine besonders hohe spezifische Wärmekapazität von 4,182 kJ/(kg K) aufweist. Beispielsweise wird beim Gefrieren von Wasser, d.h. dem Phasenübergang von flüssig zu fest, ungefähr eine so große Wärmemenge frei wie zum Erwärmen derselben Menge Wasser von 0°C auf 80°C benötigt wird. Neben Wasser kommen auch andere Phasenwechselmaterialien in Frage, beispielsweise Dikaliumhydrogenphosphat-Hexahydrat oder Natriumacetat-Trihydrat.

In diesem Zusammenhang wird insbesondere vorgeschlagen, dass das Phasenwechselmaterial eine Umwandlungstemperatur aufweist, die größer ist als -10°C und geringer ist als 25°C, insbesondere größer ist als 5°C und geringer ist als 20°C. Diese Umwandlungstemperaturen liegen vorteilhaft in demjenigen Temperaturbereich, der bei in dem Zubereitungsraum zu kühlenden Speisen vorteilhaft ist. Es können Umwandlungstemperaturen kleiner als 5°C vorteilhaft sein, insbesondere auch negative Umwandlungstemperaturen, um beispielsweise ein Gefrieren von Zubereitungsgut innerhalb des Zubereitungsraumes zu erreichen. In diesem Fall kann das Phasenwechselmaterial bevorzugt auf der Basis von Paraffin oder Salz hergestellt sein, so dass die Umwandlungstemperatur beispielsweise unterhalb von 0°C liegt, vorzugsweise bis hin zu minus 10°C.

Des Weiteren wird vorgeschlagen, dass der Zwischenraum mehrere Phasenwechselmaterialien mit zueinander verschiedenen Umwandlungstemperaturen aufweist. Dadurch kann der Betriebsbereich des gekühlten Zubereitungsgefäßes vorteilhaft vergrößert werden.

Des Weiteren wird es als vorteilhaft vorgeschlagen, wenn ein Volumen des in dem Zwischenraum befindlichen Phasenwechselmaterials ungefähr so groß ist wie ein Volumen des Zubereitungsraums. Insbesondere empfiehlt es sich, dass das Volumen des Phasenwechselmaterials 0,75 mal bis 1,25 mal so groß ist wie das Volumen des Zubereitungsraums. Diese Volumenverhältnisse haben sich als besonders vorteilhaft erwiesen, um innerhalb des Zubereitungsraums befindliches Zubereitungsgut schnell und effektiv zu kühlen. Bei einem Zubereitungsraum, welcher beispielsweise ein Volumen von 1,2l aufweist, empfiehlt sich ein Volumen des Phasenwechselmaterials in einem Bereich von 1,0l bis 1,3l.

Schließlich wird neben dem zuvor beschriebenen Zubereitungsgefäß auch eine Küchenmaschine vorgeschlagen, welche ein Basisgerät und ein mit dem Basisgerät verbindbares Zubereitungsgefäß aufweist, wobei das Basisgerät und das Zubereitungsgefäß korrespondierende elektrische Kontakte zur Energieversorgung elektrischer Verbraucher des Zubereitungsgefäßes durch eine Energiequelle des Basisgerätes aufweisen, und wobei das Zubereitungsgefäß nach einer der zuvor beschriebenen Ausführungsformen ausgebildet ist und die Kühleinrichtung ein elektrischer Verbraucher des Zubereitungsgefäßes ist.

Die Küchenmaschine kann beispielsweise ein kombiniertes Koch-Mix-Gerät sein, welches eine Heizeinrichtung für das Zubereitungsgefäß und einen Elektromotor zum Antrieb eines in das Zubereitungsgefäß hineinragenden Rührwerks aufweist. Das Zubereitungsgefäß und das Basisgerät weisen korrespondierende elektrische Kontakte auf, welche bei Verbindung des Zubereitungsgefäßes mit dem Basisgerät eine Energieversorgung der elektrischen Verbraucher des Zubereitungsgefäßes über das Basisgerät ermöglichen. Ein elektrischer Verbraucher des Zubereitungsgefäßes ist dabei das zuvor beschriebene Peltier-Element, welches zur Kühlung der Gefäßwandung beziehungsweise eines innerhalb des Zubereitungsraumes befindlichen Zubereitungsgutes verwendet wird.

### Kurze Beschreibung der Zeichnungen

Im Folgenden wird die Erfindung anhand von Ausführungsbeispielen näher erläutert. Es zeigen:
- Fig. 1: eine erfindungsgemäße Küchenmaschine mit einem erfindungsgemäßen Zubereitungsgefäß,
- Fig. 2: die Küchenmaschine mit dem Zubereitungsgefäß in einer Seitenansicht,
- Fig. 3: das Zubereitungsgefäß in Alleinstellung in einem Längsschnitt,
- Fig. 4: einen vergrößerten Teilbereich einer Gefäßwandung des Zubereitungsgefäßes,
- Fig. 5: einen Querschnitt des Zubereitungsgefäßes,
- Fig. 6: einen vergrößerten Teilbereich des Zubereitungsgefäßes gemäß Figur 5.

### Beschreibung der Ausführungsformen

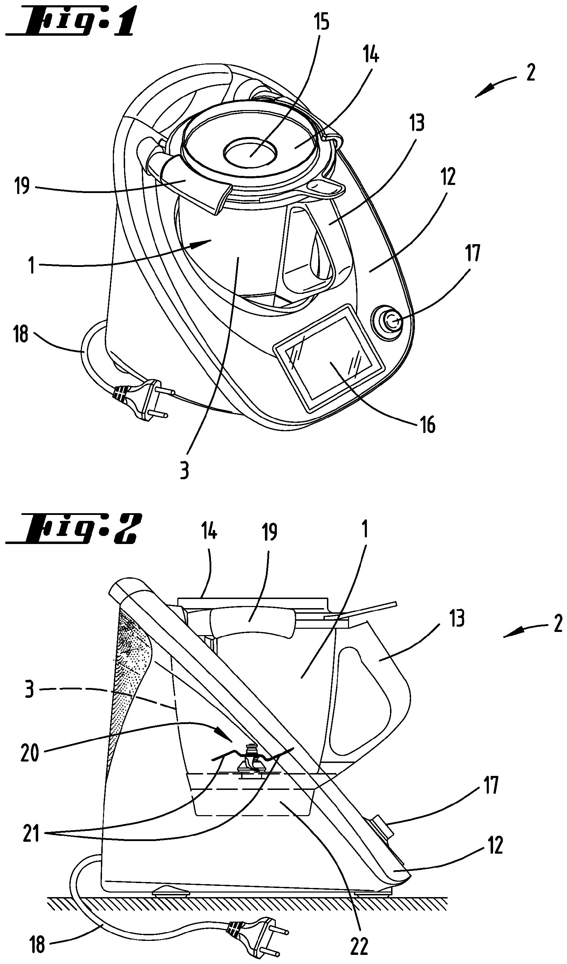

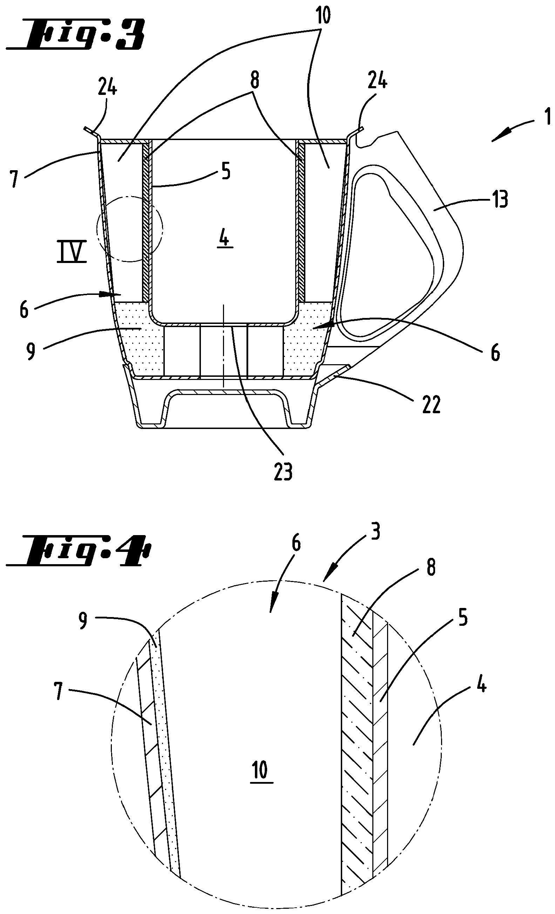

Figur 1 zeigt lediglich beispielhaft eine elektromotorisch betriebene Küchenmaschine 2, welche hier als kombiniertes Koch-Mix-Gerät ausgebildet ist. Die Küchenmaschine 2 verfügt über ein Basisgerät mit einem Gehäuse 12, mit welchem lösbar ein Zubereitungsgefäß 1 verbunden ist. Das Gehäuse 12 weist ein Display 16 und einen Schalter 17 auf, über welche ein Nutzer die Küchenmaschine 2 bedienen kann. Über das als Touchscreen ausgebildete Display 16 sowie den Schalter 17 kann der Nutzer beispielsweise eine Rezeptauswahl tätigen und Eingaben für die Steuerung der Küchenmaschine 2 vornehmen. An dem Gehäuse 12 sind des Weiteren Verriegelungselemente 19 angeordnet, die der Verriegelung des Zubereitungsgefäßes 1 mit einem Deckelelement 14 dienen. Die Verriegelungselemente 19 sind hier um eine Längsachse rotierbare Verriegelungswalzen, die über einen Rand 24 des Zubereitungsgefäßes 1 (siehe Figur 3) und des Deckelelementes 14 greifen, um diese miteinander zu verriegeln. Das Deckelelement 14 weist des Weiteren eine zentrale Öffnung 15 auf, durch welche ein Nutzer Zutaten in das Zubereitungsgefäß 1 geben kann und einen Zubereitungszustand des Zubereitungsgutes beobachten kann. Während eines Zubereitungsvorgangs ist die zentrale Öffnung 15 üblicherweise mit einem Messbecher (nicht dargestellt) verschlossen, so dass Zubereitungsgut nicht aus dem Zubereitungsgefäß 1 herausspritzen kann. Die Küchenmaschine 2 weist des Weiteren zur Energieversorgung ein Elektrokabel 18 auf, welches in üblicher Art und Weise mit der Energieversorgung eines Haushalts verbunden werden kann.

Das Zubereitungsgefäß 1 ist hier beispielsweise als Rührgefäß ausgebildet. Wie in Figur 2 dargestellt, weist dieses ein Rührwerk 20 auf, welches durch eine Bodenöffnung 23 (siehe Figur 3) des Zubereitungsgefäßes 1 in einen Zubereitungsraum 4 des Zubereitungsgefäßes 1 ragt. Das Rührwerk 20 ist mit einem elektromotorischen Drehantrieb der Küchenmaschine 2 verbunden. Das Rührwerk 20 verfügt über eine Mehrzahl von Messern 21, die zum Zerkleinern oder Mischen von Zubereitungsgut geeignet sind. An dem Zubereitungsgefäß 1 ist des Weiteren bodenseitig ein Fußteil 22 angeordnet, welches gleichzeitig der Fixierung des Rührwerks 20 an dem Zubereitungsgefäß 1 dient. An einer Gefäßwandung 3 des Zubereitungsgefäßes 1 ist des Weiteren ein Griff 13 angeordnet, an welchem ein Nutzer angreifen kann, um das Zubereitungsgefäß 1 beispielsweise aus der Küchenmaschine 2 zu entnehmen oder dieses wieder in die Küchenmaschine 2 einzusetzen.

Die Gefäßwandung 3 des Zubereitungsgefäßes 1 ist wie in den Figuren 3 bis 6 näher dargestellt doppelwandig ausgebildet und verfügt über eine dem Zubereitungsraum 4 zugewandte Innenwandung 5 und eine nach außen weisende Außenwandung 7. Zwischen der Innenwandung 5 und der Außenwandung 7 ist ein Zwischenraum 6 ausgebildet. Der Zwischenraum 6 weist eine Kühleinrichtung 8 auf, die in wärmeleitendem Kontakt mit der Innenwandung 5 steht. Die Kühleinrichtung 8 besteht hier aus einer Mehrzahl von Peltier-Elementen, welche den Zubereitungsraum 4 des Zubereitungsgefäßes 1 ringförmig umgeben.

An der von der Innenwandung 5 abgewandten Seite der Kühleinrichtung 8 schließen sich eine Mehrzahl von Kühlkörpern 10 an, die jeweils mehrere Kühlrippen 11 aufweisen. In dem Zwischenraum 6 befindet sich des Weiteren, angrenzend an sowohl die Kühleinrichtung 8 als auch den Kühlkörper 10, ein Phasenwechselmaterial 9, welches ein Volumen aufweist, das ungefähr dem Volumen des Zubereitungsraums 4 entspricht.

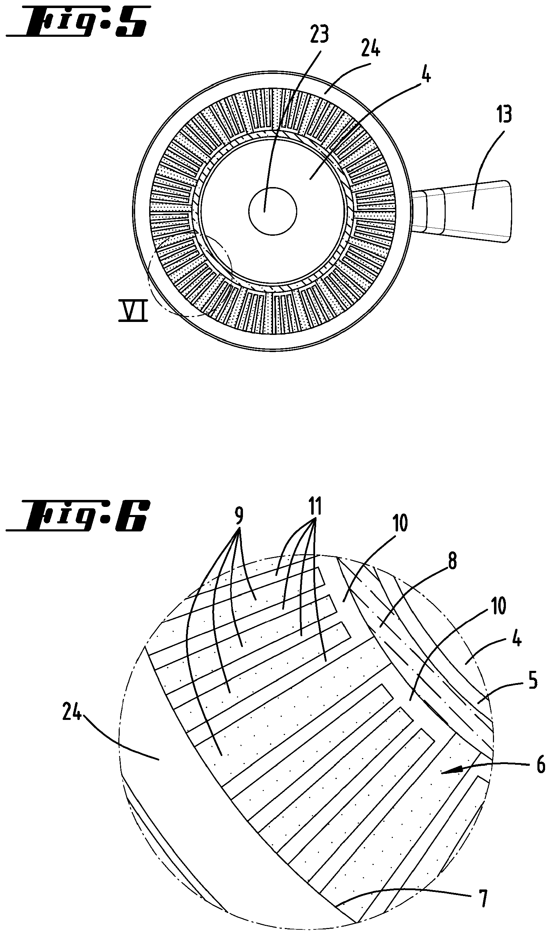

Insbesondere in den Figuren 5 und 6 ist erkennbar, wie das Phasenwechselmaterial 9 auch zwischen die Kühlrippen 11 des Kühlkörpers 10 greift und somit für eine optimale Wärmeabfuhr von dem Kühlkörper 10 beziehungsweise der Kühleinrichtung 8 und der Innenwandung 5 des Zubereitungsgefäßes 1 sorgt. Um in dem Zubereitungsraum 4 befindliches Zubereitungsgut auf eine Temperatur unterhalb der Raumtemperatur kühlen zu können, weist das Phasenwechselmaterial 9 vorzugsweise eine Umwandlungstemperatur unterhalb der Raumtemperatur auf, hier beispielsweise im Bereich von 10°C. Gegebenenfalls können zwei verschiedene Phasenwechselmaterialien 9 gleichzeitig angewendet werden, um den Betriebsbereich des gekühlten Zubereitungsgefäßes 1 zu erweitern.

Die Kühlleistung und Effizienz der hier als Peltier-Elemente ausgebildeten Kühleinrichtung 8 sind stark von einer Temperaturdifferenz zwischen der warmen und der kalten Seite der Kühleinrichtung 8 abhängig. Durch die Nutzung des Phasenwechselmaterials 9 auf der warmen Seite der Peltier-Elemente, können die Kühlleistung und Effizienz der Peltier-Elemente im Vergleich zu raumluftgekühlten Peltier-Elementen bei gleicher Kaltseitentemperatur deutlich erhöht werden. Insbesondere für beispielsweise die Zubereitung von Speiseeis, kann eine höhere Temperaturdifferenz zwischen der warmen und der kalten Seite der Kühleinrichtung 8 erforderlich sein, die mit herkömmlichen, raumluftgekühlten Peltier-Element-Systemen nicht erreicht werden könnte.

Um die Temperaturdifferenz möglichst groß zu machen, wird das Phasenwechselmaterial 9 vorzugsweise vorgekühlt. Dies kann entweder durch die Lagerung des Zubereitungsgefäßes 1 in einem Kühlraum oder Kühlschrank geschehen, oder durch das Aufheizen eines Mediums, wie z.B. Wasser, innerhalb des Zubereitungsraums 4 des Zubereitungsgefäßes 1, so dass in dem Phasenwechselmaterial 9 gespeicherte Wärme auf das in dem Zubereitungsraum 4 befindliche Wasser übergeben werden kann.

## Patentansprüche

1. Zubereitungsgefäß (1), insbesondere für eine Küchenmaschine (2), wobei das Zubereitungsgefäß (1) eine Gefäßwandung (3) und einen von der Gefäßwandung (3) umgebenen Zubereitungsraum (4) aufweist, wobei der Gefäßwandung (3) eine die Gefäßwandung (3), nämlich eine eine den Zubereitungsraum (4) begrenzende Innenwandung (5) der Gefäßwandung (3) wärmeleitend kontaktierende Kühleinrichtung (8) zur Kühlung eines in dem Zubereitungsraum (4) vorhandenen Zubereitungsgutes zugeordnet ist, wobei die Kühleinrichtung (8) in wärmeleitendem Kontakt mit der Innenwandung (5) steht, **dadurch gekennzeichnet, dass** die Gefäßwandung (3) zumindest in einem Teilbereich doppelwandig mit einer den Zubereitungsraum (4) begrenzenden Innenwandung (5) und einer separat dazu ausgebildeten, durch einen Zwischenraum (6) von der Innenwandung (5) beabstandeten Außenwandung (7) ausgebildet ist, wobei der Zwischenraum (6) in eine Richtung von dem Zubereitungsraum (4) zu der Außenwandung (7) betrachtet die Kühleinrichtung (8) und ein zwischen der Kühleinrichtung (8) und der Außenwandung (7) befindliches Phasenwechselmaterial (PCM, Phase Change Material) (9) aufweist, wobei das Phasenwechselmaterial (9) ein Latentwärmespeichermaterial ist, dessen absorbierbare Wärmeenergiemenge im Bereich der für das Phasenwechselmaterial (9) charakteristischen Umwandlungstemperatur wesentlich größer ist als eine Wärmeenergiemenge, die aufgrund der spezifischen Wärmekapazität des Phasenwechselmaterials (9) außerhalb des Phasenumwandlungseffekts gespeichert werden kann, wobei das Phasenwechselmaterial (9) durch Zwischenanordnung der Kühleinrichtung (8) von der Innenwandung (5) beabstandet ist.

2. Zubereitungsgefäß (1) nach Anspruch 1, **dadurch gekennzeichnet, dass** die Kühleinrichtung (8) ein Peltier-Element ist.

3. Zubereitungsgefäß (1) nach Anspruch 2, **dadurch gekennzeichnet, dass** auf der von der Innenwandung (5) abgewandten Seite des Peltier-Elements ein Kühlkörper (10), insbesondere ein Kühlrippen (11) aufweisender Kühlkörper (10), angeordnet ist.

4. Zubereitungsgefäß (1) nach einem der vorhergehenden Ansprüche, **dadurch gekennzeichnet, dass** das Phasenwechselmaterial (9) eine spezifische Wärmekapazität von größer als 2 kJ/(kg K), insbesondere von größer als 4 kJ/(kg K), aufweist.

5. Zubereitungsgefäß (1) nach Anspruch 4, **dadurch gekennzeichnet, dass** das Phasenwechselmaterial eine Umwandlungstemperatur aufweist, die größer ist als -10°C und geringer ist als 25°C, insbesondere größer ist als 5°C und geringer ist als 20°C.

6. Zubereitungsgefäß (1) nach Anspruch 4 oder 5, **dadurch gekennzeichnet, dass** der Zwischenraum (6) mehrere Phasenwechselmaterialien (9) mit zueinander verschiedenen Umwandlungstemperaturen aufweist.

7. Zubereitungsgefäß (1) nach einem der vorhergehenden Ansprüche, **dadurch gekennzeichnet, dass** ein Volumen des Phasenwechselmaterials (9) 0,75 mal bis 1,25 mal so groß ist wie das Volumen des Zubereitungsraums (4).

8. Küchenmaschine (2) mit einem Basisgerät (12) und einem mit dem Basisgerät (12) verbindbaren Zubereitungsgefäß (1), wobei das Basisgerät (12) und das Zubereitungsgefäß (1) korrespondierende elektrische Kontakte zur Energieversorgung elektrischer Verbraucher des Zubereitungsgefäßes (1) durch eine Energiequelle des Basisgerätes (12) aufweisen, **dadurch gekennzeichnet, dass** das Zubereitungsgefäß (1) nach einem der vorhergehenden Ansprüche ausgebildet ist und die Kühleinrichtung (8) ein elektrischer Verbraucher des Zubereitungsgefäßes (1) ist.

## Claims

1. A preparation vessel (1), in particular for a food processor (2), wherein the preparation vessel (1) has a vessel wall (3) and a preparation area (4) surrounded by the vessel wall (3), wherein the vessel wall (3) has allocated to it a cooling device (8) which contacts the vessel wall (3), namely an inner wall (5) of the vessel wall (3) delimiting the preparation area (4) in a thermally conductive manner, for cooling a product to be prepared in the preparation area (4), wherein the cooling device (8) is in thermally conductive contact with the inner wall (5), **characterized in that** the vessel wall (3) in at least a partial area has a double-walled design, with an inner wall (5) bordering the preparation area (4) and an outer wall (7) that is formed separately from the latter and spaced apart from the inner wall (5) by a gap (6), wherein the gap (6) has the cooling device (8) and a phase change material (PCM, phase change material) (9) located between the cooling device (8) and the outer wall (7) as viewed in a direction from the preparation area (4) to the outer wall (7), wherein the phase change material (9) is a latent heat storage material, wherein the absorbable amount of heat energy of the latent heat storage material in the range of the transition temperature characteristic of the phase change material (9) is significantly greater than an amount of heat energy that can be stored due to the specific heat capacity of the phase change material (9) outside of the phase change effect, wherein the phase change material (9) is spaced apart from the inner wall (5) by interposing the cooling device (8).

2. The preparation vessel (1) according to claim 1, **characterized in that** the cooling device (8) is a Peltier element.

3. The preparation vessel (1) according to claim 2, **characterized in that** a heat sink (10), in particular a heat sink (10) that has cooling ribs (11), is arranged on the side of the Peltier element facing away from the inner wall (5).

4. The preparation vessel (1) according to claim one of the preceding claims, **characterized in that** the phase change material (9) has a specific heat capacity of greater than 2 kJ/(kg K), in particular of greater than 4 kJ/(kg K).

5. The preparation vessel (1) according to claim 4, **characterized in that** the phase change material has a transition temperature that is greater than -10 °C and less than 25 °C, in particular of greater than 5 °C and less than 20 °C.

6. The preparation vessel (1) according to claim 4 or 5, **characterized in that** the gap (6) has several phase change materials (9) with transition temperatures that differ from each other.

7. The preparation vessel (1) according to one of the preceding claims, **characterized in that** a volume of the phase change material (9) is 0.75 to 1.25 times as large as the volume of the preparation area (4).

8. A food processor (2) with a base device (12) and a preparation vessel (1) that can be connected with the base device (12), wherein the base device (12) and the preparation vessel (1) have corresponding electrical contacts for supplying power to electrical consumers of the preparation vessel (1) from a power source of the base device (12), **characterized in that** the preparation vessel (1) is designed according to one of the preceding claims, and the cooling device (8) is an electrical consumer of the preparation vessel (1).

## Revendications

1. Récipient de préparation (1), en particulier pour un appareil de cuisine (2), dans lequel le récipient de préparation (1) présente une paroi de récipient (3) et un espace de préparation (4) entouré par la paroi de récipient (3), dans lequel à la paroi de récipient (3) est associé un dispositif de refroidissement (8) en contact de conduction thermique avec la paroi de récipient (3), à savoir avec une paroi intérieure (5) de la paroi de récipient (3) délimitant l'espace de préparation (4), pour refroidir un aliment à préparer qui se trouve dans l'espace de préparation (4), dans lequel le dispositif de refroidissement (8) est en contact de conduction thermique avec la paroi intérieure (5), **caractérisé en ce que** la paroi du récipient (3) est à double paroi au moins dans une zone partielle avec une paroi intérieure (5) délimitant l'espace de préparation (4) et une paroi extérieure (7) formée séparément de celle-ci et espacée de la paroi intérieure (5) par un espace intermédiaire (6), dans lequel l'espace intermédiaire (6), vu dans une direction allant de l'espace de préparation (4) à la paroi extérieure (7), comprend le dispositif de refroidissement (8) et un matériau à changement de phase (PCM, Phase Change Material) (9) situé entre le dispositif de refroidissement (8) et la paroi extérieure (7), dans lequel le matériau à changement de phase (9) est un matériau de stockage de chaleur latente dont la quantité d'énergie thermique absorbable dans la plage de la température de transformation caractéristique du matériau à changement de phase (9) est sensiblement supérieure à une quantité d'énergie thermique qui peut être stockée en dehors de l'effet de transformation de phase en raison de la capacité thermique spécifique du matériau à changement de phase (9), dans lequel le matériau à changement de phase (9) est espacé de la paroi intérieure (5) par interposition du dispositif de refroidissement (8).

2. Récipient de préparation (1) selon la revendication 1, **caractérisé en ce que** le dispositif de refroidissement (8) est un élément Peltier.

3. Récipient de préparation (1) selon la revendication 2, **caractérisé en ce qu'**un corps de refroidissement (8), en particulier un corps de refroidissement (10) présentant des ailettes de refroidissement (11), est agencé sur le côté de l'élément Peltier détourné de la paroi intérieure (5).

4. Récipient de préparation (1) selon l'une des revendications précédentes, **caractérisé en ce que** le matériau à changement de phase (9) a une capacité thermique spécifique supérieure à 2 kJ/(kg K), en particulier supérieure à 4 kJ/(kg K).

5. Récipient de préparation (1) selon la revendication 4, **caractérisé en ce que** le matériau à changement de phase a une température de transformation qui est supérieure à -10°C et inférieure à 25°C, en particulier supérieure à 5°C et inférieure à 20°C.

6. Récipient de préparation (1) selon la revendication 4 ou 5, **caractérisé en ce que** l'espace intermédiaire (6) comporte plusieurs matériaux à changement de phase (9) ayant des températures de transformation mutuellement différentes.

7. Récipient de préparation (1) selon l'une des revendications précédentes, **caractérisé en ce qu'**un volume du matériau à changement de phase (9) est 0,75 fois à 1,25 fois plus grand que le volume de l'espace de préparation (4) .

8. Appareil de cuisine (2) avec un dispositif de base (12) et un récipient de préparation (1) pouvant être relié au dispositif de base (12), dans lequel le dispositif de base (12) et le récipient de préparation (1) présentent des contacts électriques correspondants pour l'alimentation en énergie de récepteurs électriques du récipient de préparation (1) par une source d'énergie du dispositif de base (12), **caractérisé en ce que** le récipient de préparation (1) est conçu selon l'une des revendications précédentes et le dispositif de refroidissement (8) est un récepteur électrique du récipient de préparation (1).
